(19) Europäisches Patentamt

European Patent Office

Office européen des brevets

(11) **EP 1 617 530 A2**

(12) **EUROPEAN PATENT APPLICATION**

(43) Date of publication:
**18.01.2006 Bulletin 2006/03**

(51) Int Cl.:
*H01S 3/107* (2006.01)

(21) Application number: **05106474.9**

(22) Date of filing: **14.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.07.2004 US 587547 P**

(71) Applicant: **High Q Laser Production GmbH 6845 Hohenems (AT)**

(72) Inventors:
• **KOPF, Daniel**
 **A-6844, Altach (AT)**
• **KULCSAR, Gabor**
 **A-6812, Meiningen (AT)**
• **LEDERER, Maximilian Josef**
 **A-6861, Alberschwende (AT)**

(74) Representative: **Harmann, Bernd-Günther Büchel, Kaminski & Partner Patentanwälte Est. Austrasse 79 9490 Vaduz (LI)**

(54) **Pulse train generator and method for generating a repeating sequence of laser pulses**

(57)    A pulse train generator for generating laser pulses comprises a laser setup with a cavity, an electro-optic switch (4) for switching the pulses in and out from the cavity. The electro-optic switch (4) and a control element (4') are designed and connected for switching out laser pulses with a first repetition rate thereby forming a sequence of laser pulses. Said sequence of laser pulses is repeated with a second repetition rate, thereby forming a repeating sequence of laser pulses. A potential function with at least two steps or a switch setup with two electro-optic modulators are used to operate the setup with the second repetition rate.

*Fig.2a*

EP 1 617 530 A2

## Description

### Field of the invention

The invention relates generally to the field of laser systems that generate ultra short laser pulses and concerns a pulse train generator according to the preamble of claim 1 and a method for generating a repeating sequence of laser pulses according to the preamble of claim 9.

The system uses an electro-optic device (such as a Pockels cell) installed in the cavity of a regenerative amplifier for generating a train of amplified optical pulses or pulse burst with a predetermined burst repetition rate. The regenerative amplifier comprises the same or additional one or more electro-optic devices built into the cavity for minimizing the pulse-to-pulse amplitude variation during a burst at the output of the amplifier. A related regenerative amplifier design can be used to extend the available maximum repetition rate of amplified optical pulses.

### Background of the invention

Laser oscillators of various types, e.g. solid state, fiber, gas, dye etc., can generate pulses with femtosecond to several tens of picoseconds duration. The pulse repetition rate from these devices depends on the cavity length and is usually in the several MHz to GHz range. Since the average output power of these types of pulsed laser sources is a few tens to a few hundred mW the single pulse energy falls in the range of a few nJ to a few hundred nJ.

Many applications such as medical, laser machining, laser marking and cutting, require orders of magnitude higher energy/pulse. The pulse energy from the above mentioned type of oscillators is restricted, in some cases by nonlinear effects such as self phase modulation or self focusing in other cases by the limited amount of available pump power.

As a consequence several amplifier schemes were developed for boosting the energy/pulse up to the mJ range or higher. In a typical setup a laser pulse is coupled into an amplifier cavity and switched out after more than one roundtrip. For femtosecond and picosecond pulses the chirped pulse amplification (CPA) system was suggested by Strickland and Mourou in "Compression of amplified chirped optical pulses", Optics Communications, Vol. 56 No. 3, December 1, 1985 or P. Maine and G. Mourou in "Amplification of 1-nsec pulses in Nd:glass followed by compression to 1 psec", Optics Letters, Vol. 13, No. 6, June 1988, and is now a concept well known to a skilled person. Both documents are incorporated by reference.

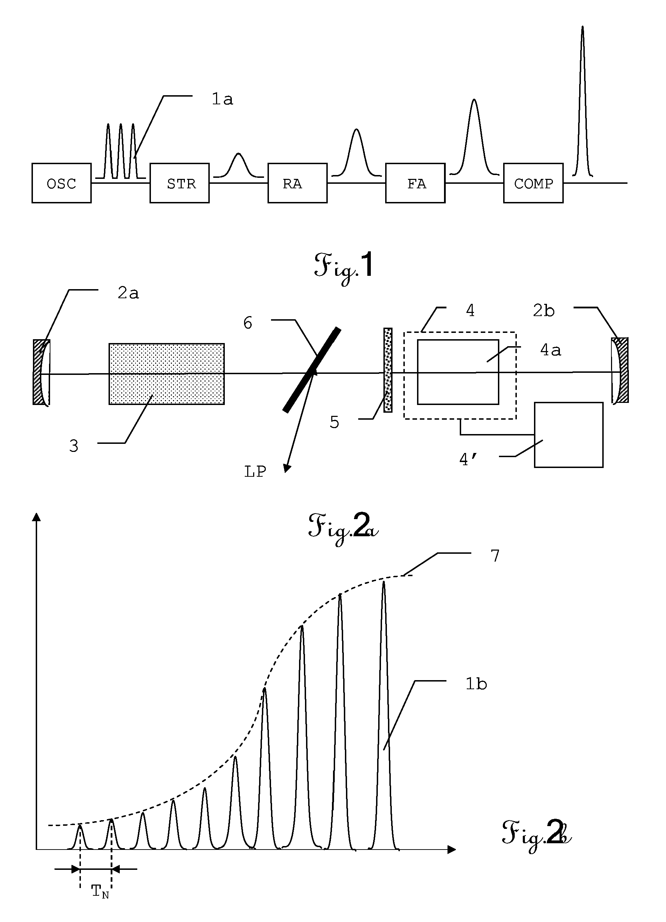

Figure 1 shows the schematics of the CPA laser system. In the CPA system pulses 1a are generated in an oscillator OSC and subsequently temporally stretched in a stretcher STR like a dispersive line stretcher such as an optical fiber or a grating stretcher. Pulse stretching reduces the peak power of the pulses by the temporal stretching factor. The energy/pulse can then be increased by at least the same factor while remaining always below the limit of various destructive nonlinear effects. After amplification the pulses are compressed in a compressor COMP to their original pulse length increasing the peak power obtained from the CPA system.

In a CPA system the usual first amplifier stage, following pulse stretching, is the regenerative amplifier RA. While the detailed operation of the regenerative amplifier is well known, the operation of this device is disclosed in more detail since it is intimately related to the invention. The regenerative amplifier RA is a closed laser cavity while the selected pulse is being amplified, has the largest amplification factor (3-4 orders of magnitude) and usually has the highest number of roundtrips among the amplifier stages of a CPA laser system. Therefore the regenerative amplifier is expected to "regenerate" the TEM00 spatial mode of the oscillator OSC that may have been degraded in the pulse stretcher STR. The regenerative amplifier RA may be followed by one or more further amplifier stages FA

As shown for a simple setup in Fig.2a the regenerative amplifier consists of a first mirror 2a and a second mirror 2b forming the amplifier cavity, a thin-film polarizer 6 that serves as the input and output optics, a wave plate 5 - e.g. $\lambda/2$ or $\lambda/4$ depending on the amplifier design - a fast electro-optic switch 4 (e.g. with a first electro-optic modulator like a Pockels cell 4a) that switches the pulse in and out from the amplifier cavity employing polarization rotation and finally the gain medium 3 with the pump light source (not shown in this Fig.). While all stretched pulses emitted from a laser oscillator are permitted to enter the regenerative amplifier, only pulses with a reduced repetition rate are captured as a result of polarization rotation by the Pockels cell 4a in the switch 4 which is controlled by a control element 4'. The phenomenon of polarization rotation by applying a potential difference to an electro-optic device such as the Pockels cell and the related partial or full reflection/transmission of the optical signal from a succeeding polarizer is well known to a skilled person. These pulses will remain in the closed cavity of the regenerative amplifier and get amplified over several roundtrips. The reduced pulse repetition rate obtained from the regenerative amplifier is in the range of a few Hz to a few hundred kHz. The gain in the regenerative amplifier is constant for most of the useful part of amplification while it is gradually reduced to 0 as the amplifier gets saturated by the large amplified pulses. In most cases the pulse is fully rejected from the regenerative amplifier by another polarization rotation by the Pockels cell around the onset of the saturation regime. The output laser pulse LP of the regenerative amplifier is therefore a single amplified pulse with the same repetition rate as that of the capturing and rejection rate into and from the amplifier cavity.

Figure 2b shows the typical evolution of peak power inside the amplifier as a function of time. The captured pulse 1b is circulating with the roundtrip time $T_N$ in the regenerative amplifier and is being amplified at each pass through the gain medium. The corresponding pulse envelope 7 increases to a saturation level that designates the maximum of amplification in the regenerative amplifier setup.

The peak power limitation of the pulse rejected from a well designed regenerative amplifier is determined by the damage thresholds of the optical elements of this amplifier stage.

**Detailed description of the invention**

There are applications in which a short train or burst of amplified pulses is more desirable than a single amplified pulse, e.g. as disclosed in US 6,552,301 which is incorporated by reference.

It is also expected that the extractable amount of energy from the regenerative amplifier can be increased if this energy is distributed over several pulses emitted from the amplifier that are more than 10-15 ns apart.

The temporal separation of the pulses in the pulse train or burst is equal to the roundtrip time of the regenerative amplifier. Such train of output pulses can be obtained from a regenerative amplifier if the rejection of the amplified pulse is not full but partial. Such partial rejection of pulse energy from the regenerative amplifier can be obtained by the proper selection of polarization rotation, i.e., by applying the appropriate potential difference to the Pockels cell. In this case a predetermined number of amplified pulses can be obtained.

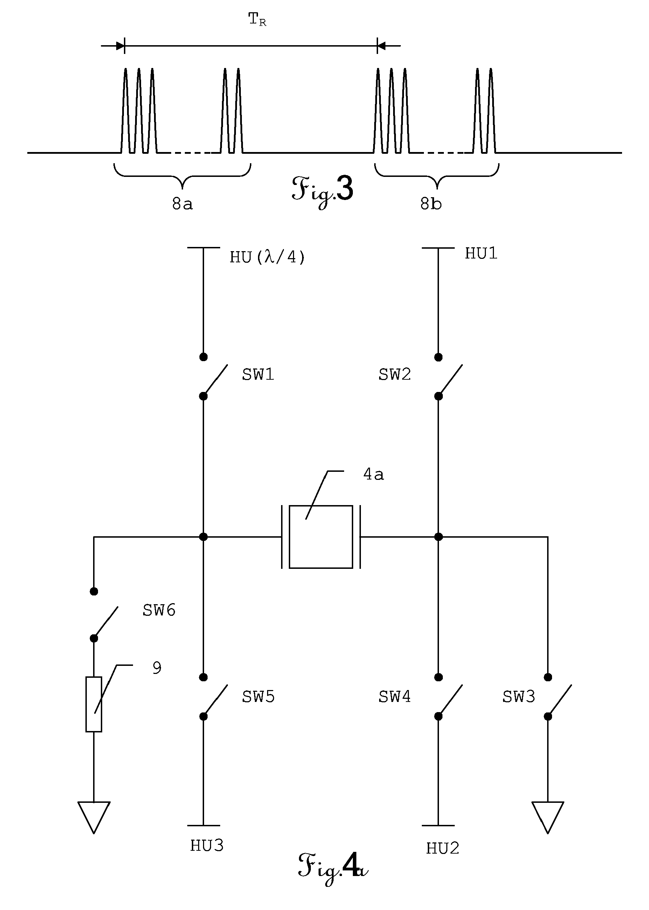

Figure 3 shows the output of a CPA system emitting trains or bursts of pulses with a number from 2 up to more than 20 pulses. A first train 8a or sequence of laser pulses with a first repetition time of pulses within that sequence is followed by a second train 8b or sequence of pulses after a second repetition time $T_R$. The generated trains form repeated sequences of laser pulses with at least two different time constants or repetition rates.

The invention is concerned about the way such train or burst of amplified pulses can be obtained from the regenerative amplifier and about the pulse-to-pulse stability that can be achieved in one such train.

A further problem that the invention is concerned about is to provide a setup that can generate amplified pulses with very high repetition rate, i.e. above repetition rates that are accessible by a single Pockels cell switch.

In order to solve the problems the inventive concept basically uses the electro-optic device (e.g. the Pockels cell) that is already part of the regenerative amplifier for producing the above described train of pulses. An additional number of similar electro-optic devices can be mounted inside the regenerative amplifier for special purposes such as achieving better pulse-to-pulse stability within a burst or controlling the envelope of the pulse train (burst).

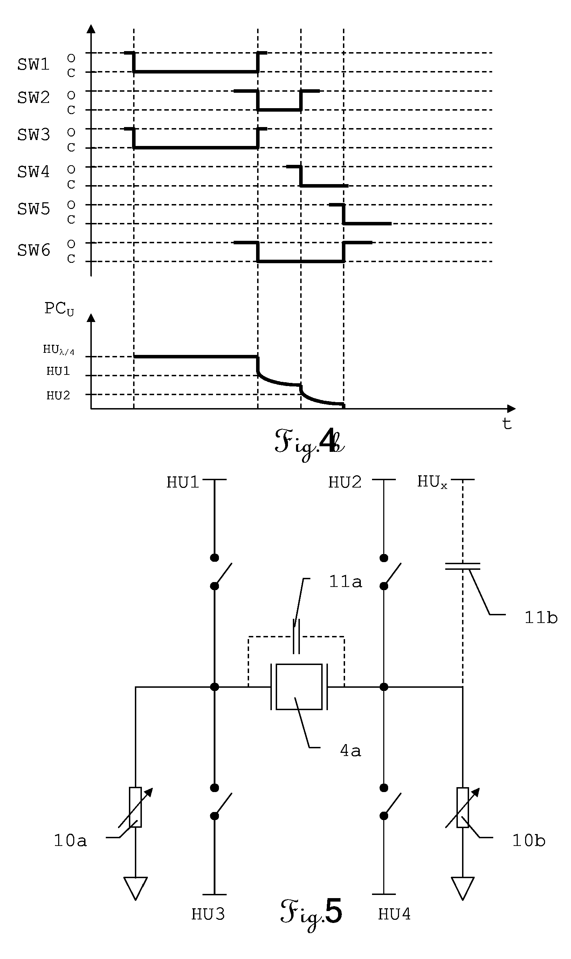

Figures 4a and b show an example of the time dependent operation of a high-voltage driver connected to the Pockels cell for producing the optical pulse burst. The basic control principles of Pockels cells for operating in a laser system are disclosed in US 2004/0101001 which is incorporated by reference. Figure 4a is a setup with two steps and one RC decay function where HU($\lambda$/4) and HU1-3 designate the high-voltage supply and SW1 to SW6 designate six switches used to control the operation of the Pockels cell 4a. One switch SW6 is connected with the ground via a resistor 9 and HU2 is set equal to HU3. Figure 4b above shows the operation of the switches SW1 to SW6 with two conditions: open state O or closed state C. The voltage level applied at the Pockels cell 4a is shown below in Fig.4b.

Fig.5 shows a modification of the setup of Fig.4a with two adjustable resistors 10a and 10b. This setup allows switching four steps of potential difference with short time constants (if R is reasonably small)

$$\tau = C_{PC} \cdot R$$

with $C_{PC}$ as the capacitance of the Pockels cell 4a and adjustable R. Two capacitors 11a and 11b may be used in addition for modifying the potential difference function on the Pockels cell 4a.

Figure 6a and 6b show a similar operation with two Pockels cells as first and second electro-optic modulators 4a and 4b.

The option of using two Pockels cells 4a and 4b in the regenerative amplifier, in the general sense of amplified pulse train forming, extends the maximum available amplified pulse repetition rate from the CPA laser system by a factor of two. The maximum available pulse repetition rate in a reasonably high gain regenerative amplifier is determined by the highest switching frequency of the Pockels cell driver in the control element. Repetition rate doubling of the amplified pulses can be achieved by using the two Pockels cells so that they switch pulses in and out of the regenerative amplifier alternatively. The resulted composite pulse repetition rate depends on the precision of the timing adjustment between the two Pockels cell drivers.

Figure 6a shows the schematic setup of this solution with two Pockels cells 4a and 4b and corresponding switches SW1 and SW2. In this example HU1, HU2 and HU($\lambda$/4) are set equal. Further extension of this setup by using 3, 4, or more Pockels cells as well as further switches can lead to pulse repetition rate tripling quadrupling etc. This method is of course limited by the introduction of losses in the regenerative amplifier cavity at the installation of each additional Pockels cell as well as economical considerations related to the complexity of the system.

The time dependent operation of switches and Pockels cells and the caused dumping of output pulses 1c are shown in Fig.6b for both switches and their states "open" and "closed".

The following is a description of the effect of polarization rotation characteristics of the Pockels cell on the stability or pulse-to-pulse peak power variation of the amplified pulses rejected from the regenerative amplifier.

It is assumed that the potential difference on the Pockels cell can be adjusted to follow various mathematical functions and that HV steps can be applied to the electrodes of the Pockels cell with a few nanoseconds rise and fall times. It is also assumed that each electrode of a Pockels cell can be connected to several voltage generators or to ground through independent fast electrical switches. For modelling the behaviour of the regenerative amplifier realistic values of roundtrip gain and loss found in a solid state regenerative amplifier as well as a realistic value for the initial energy/pulse circulating in the amplifier are assumed.

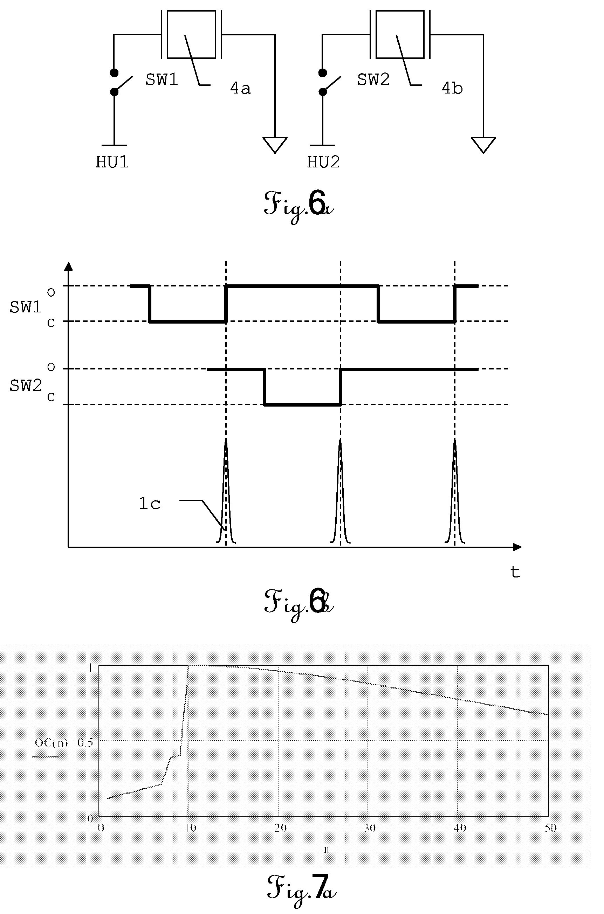

The calculated results of pulse-to-pulse peak power fluctuation in two examples of Pockels cell switching designs are presented in Figure 7a, 7b, 8a and 8b. In both cases only one Pockels cell is installed into the regenerative amplifier cavity. In these two examples the potential difference on the Pockels cells are switched in different sequences, to different values and have a different temporal evolution. The Pockels cells in both cases still act to capture the pulse to be amplified in the regenerative amplifier as well as fully switch the pulse out of the regenerative amplifier cavity providing the last pulse in the burst. Beside these functions the Pockels cells also apply the necessary and predetermined polarization rotation to the pulse circulating in the regenerative amplifier cavity so the first to the one before the last pulses of the burst are obtained at the output.

Figures 7a shows the output coupling function from the regenerative amplifier cavity while 7b shows the result for a burst obtained with an RC-element, 2 high voltage steps and gate opening and complete cavity dumping on the Pockels cell. The equations and parameters are set as shown below.

The output coupling as a function of Pockels cell voltage (the usual sin^2 function of a Pockels cell switch and a polarizer) :

$$OC(n) = \sin\left(\frac{\pi}{2} \cdot \left[1 - \exp\left(\frac{-n}{\tau}\right)\right] + A1\Phi(n - N1) + A2\Phi(n - N2) + A3\Phi(n - N3)\right)^2$$

where A1, A2,... are high voltage amplitudes, $\Phi$(n-N) is the Heaviside function, $\tau$ is the time constant of the RC decay n is the number of roundtrips in the regenerative amplifier cavity and N is the highest number of pulses that can be obtained with the model.

The normalized power of the coupled out pulse is described by:

$$E\_p(n) = E\_ic\, OC(n) \cdot \prod_{n=1}^{N} \left[(1 - OC(n-1)) \cdot (1 - L + G(n))\right]$$

where E_ic is proportional to the input power, L and G are the losses and the gain in the regenerative amplifier respectively.

With the normalized input power and gain function:

$$E\_ic = 2$$

$$G(n)\_0.06 \cdot \left(1 - \frac{n}{N}\right)$$

In the model the following values were taken (others can be also used that will result in different pulse burst length, different pulse-to-pulse stability etc.)

$$N = 50$$

$$\tau = 70$$

$$L = 0.04$$

$$N1 = 1$$

$$N2 = 8$$

$$N3 = 10$$

$$A1 = 0.33$$

$$A2 = 0.17$$

$$A3 = 0.88$$

$$n = 1,2...N$$

The model predicts the possibility of having a +/-20% maximum peak power variation between the amplified pulses in one burst in case one high voltage value on one of the electrodes of the Pockels cell follows an exponential decay function.

Figures 8a shows the out coupling function from the regenerative amplifier and 8b show a burst produced with 6 high voltage steps and complete cavity dumping on the Pockels cell. If the potential difference across the Pockels cell varies in discrete steps of predetermined amplitude an approximately +/- 25% fluctuation can be achieved with 4 steps (inclusive final switch out of the pulse) while the fluctuation is reduced to about +/- 15% if 6 steps are employed.

The equations and parameters are set as shown below (the notation is the same as for the model calculation above):

$$OC(n) = \sin\left(\begin{array}{l} A1\Phi(n - N1) + A2\Phi(n - N2) + A3\Phi(n - N3) + ... \\ + A4\Phi(n - N4) + A5\Phi(n - N5) + A6\Phi(n - N6) \end{array}\right)^2$$

$$E\_p(n) = E\_icOC(n) \cdot \prod_{n=1}^{N}\left[(1 - OC(n-1)) \cdot (1 - L + G(n))\right]$$

with

$$E\_ic = 2$$

$$G(n)\_0.06 \cdot \left(1 - \frac{n}{N}\right)$$

and

$$N = 50$$

$$L = 0.04$$

$$N1 = 1$$

$$N2 = 4$$

$$N3 = 6$$

$$N4 = 8$$

$$N5 = 9$$

$$N6 = 10$$

$$A1 = 0.35$$

$$A2 = 0.06$$

$$A3 = 0.08$$

$$A4 = 0.12$$

$$A5 = 0.18$$

$$A6 = 0.8$$

$$n = 1,2...N$$

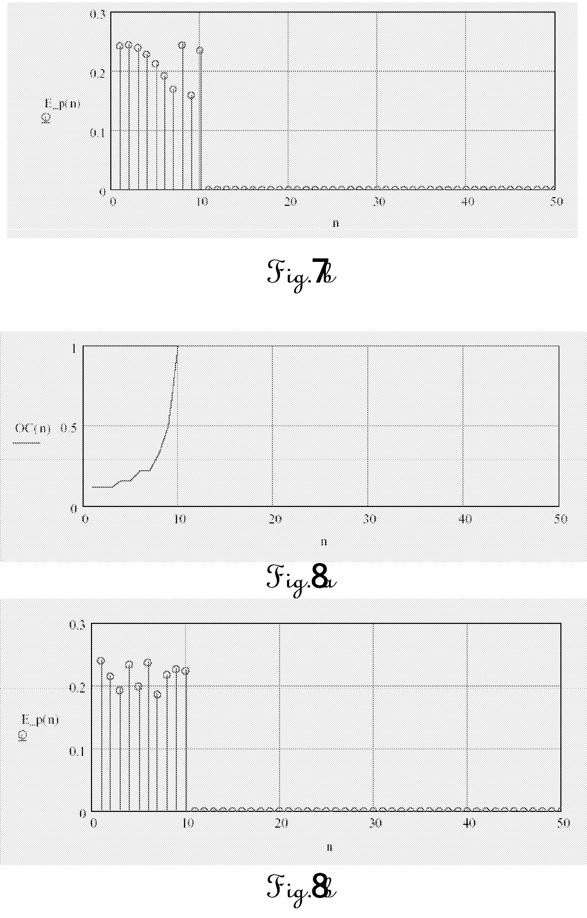

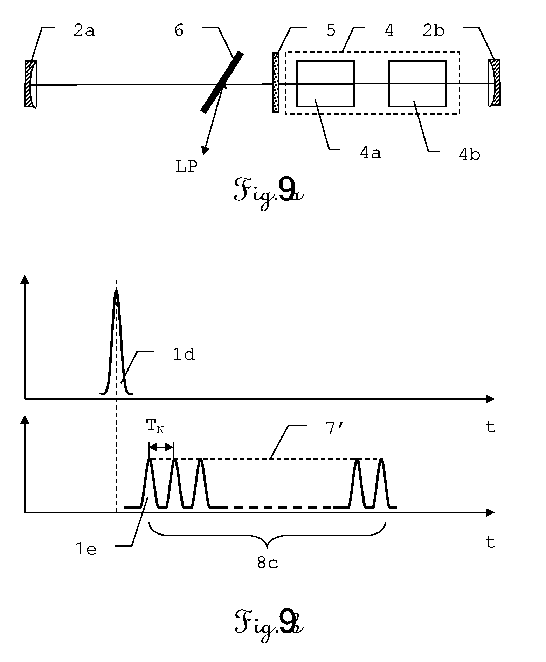

As shown in Figures 9a and 9b a similar optical system can also be used for generating a burst of pulses 1d from a single high energy pulse 1d using a cavity similar to that of a regenerative amplifier but excluding the gain medium from the cavity. This way a train 8c of pulses 1e can be produced with an adjustable pulse-to-pulse peak power variation thereby defining an adjustable pulse envelope 7'.

The pulses 1e are repeated with the roundtrip time $T_N$ of the pulse train generator cavity.

Figure 9a shows the layout of such a pulse train generator with a first mirror 2a and a second mirror 2b forming the cavity, a thin-film polarizer and a quarter-wave plate 5. The in- and out-coupling of laser pulses LP is controlled by the operation of the first Pockels cell 4a and the second Pockels cell 4b. The first Pockels cell 4a and the second Pockels cell 4b are operated as first and second electro-optic modulators forming an electro-optic switch 4 for switching the pulse in and out from the cavity. More than 2 Pockels cell can also be used. The electro-optic modulators are time-asynchronously operated, e.g. in an alternating manner. The overall behaviour is similar to an electro-optic switch with increased switching speed. Figure 9b shows the input signals (above) and output signals (below) from the device.

**Claims**

1. Pulse train generator for generating a repeating sequence of laser pulses (1a), especially ultra-short pulses (1a) with a pulse length in the femto- or picosecond range, with a laser setup comprising

   - a first mirror (2a) and a second mirror (2b) forming a cavity,
   - an electro-optic switch (4) with at least a first electro-optic modulator (4a) for switching the pulses (1a) in and out from the cavity, especially by employing polarization rotation,
   - a control element (4') for controlling the electro optic switch (4),
   - wherein the electro-optic switch (4) and the control element (4') are designed and connected for switching out the laser pulses (1a) with a first repetition rate thereby forming a sequence (8a,8b) of laser pulses (1a),

   **characterized in that**
   the electro-optic switch (4) and the control element (4') are designed and connected for switching out said sequence (8a,8b) of laser pulses (1a) with a second repetition rate, thereby forming said repeating sequence of laser pulses (1a).

2. Pulse train generator according to claim 1,
   **characterized in that**
   a temporal separation of the pulses (1a) in the sequence (8a,8b) is equal to the roundtrip time $T_N$ of the cavity.

3. Pulse train generator according to claim 1 or 2,
   **characterized in that**
   the control element (4') is designed and connected for supplying a potential difference function with at least two steps to the first electro-optic modulator (4a), preferably a RC decay function with at least two steps.

4. Pulse train generator according to claim 3,
   **characterized in that**
   the control element (4') comprises an electronic RC circuit with six switches (SW1-6) or 4 switches (SW1-4) and 2 adjustable resistors (10a,10b).

5. Pulse train generator according to claim 1 or 2,
   **characterized in that**
   the electro-optic switch (4) comprises at least a second electro-optic modulator (4b).

6. Pulse train generator according to one of the preceding claims,
   **characterized in that**
   the cavity comprises a laser medium (3), preferably pumped by a laser diode pumping device.

7. Pulse train generator according to one of the preceding claims,
   **characterized in that**
   the laser setup is designed as a regenerative amplifier.

8. Pulse train generator according to one of the preceding claims,
   **characterized in that**
   the laser setup is designed as a chirped pulse amplifier.

9. Method for generating a repeating sequence of laser pulses (1a), especially ultra-short pulses (1a) with a pulse length in the femto- or picosecond range, with a laser setup comprising

- a first mirror (2a) and a second mirror (2b) forming a cavity,
- a electro-optic switch (4) with at least a first electro-optic modulator (4a) for switching the pulses (1a) in and out from the cavity, especially by employing polarization rotation,
- a control element (4') for controlling the electro optic switch (4),
- wherein the electro-optic switch (4) switches out the laser pulses (1a) with a first repetition rate thereby forming a sequence (8a,8b) of laser pulses (1a),

**characterized in that**
the electro-optic switch (4) switches out the sequence (8a,8b) of laser pulses (1a) with a second repetition rate, thereby forming said repeating sequence of laser pulses (1a).

10. Method according to claim 9,
    **characterized in that**
    a temporal separation of the pulses (1a) in the sequence (8a,8b) is equal to a roundtrip time $T_N$ of the cavity.

11. Method according to claim 9 or 10,
    **characterized in that**
    a potential difference function, preferably a RC decay function, with at least two steps is applied to the first electro-optic modulator (4a).

12. Method according to claim 9 or 10,
    **characterized in that**
    the first electro-optic modulator (4a) and at least a second electro-optic modulator (4b) in the electro-optic switch (4) are time-asynchronously operated, preferably in an alternating manner.

Fig.1

Fig.2a

Fig.2b

$T_R$

$Fig.3$

8a        8b

HU(λ/4)        HU1

SW1        SW2

4a

SW6

9

SW5        SW4        SW3

HU3        HU2

$Fig.4a$

$\mathcal{F}ig.4b$

$\mathcal{F}ig.5$

𝔉𝔦𝔤.6a

𝔉𝔦𝔤.6b

𝔉𝔦𝔤.7a

Fig.7b

Fig.8a

Fig.8b

2a    6         5    4    2b

LP

$\mathcal{F}ig.9a$

1d

$T_N$                7'

1e

8c

$\mathcal{F}ig.9b$